## Europäisches Patentamt

## European Patent Office

## Office européen des brevets

(11) Veröffentlichungsnummer: **0 159 558**
**B1**

(12) **EUROPÄISCHE PATENTSCHRIFT**

(45) Veröffentlichungstag der Patentschrift:
**14.06.89**

(21) Anmeldenummer: **85103589.9**

(22) Anmeldetag: **26.03.85**

(51) Int. Cl.⁴: **G 02 B 6/42, G 02 B 6/26**

(54) Gehäuse für eine faseroptische Anordnung.

(30) Priorität: **05.04.84 DE 3412766**

(43) Veröffentlichungstag der Anmeldung:
**30.10.85 Patentblatt 85/44**

(45) Bekanntmachung des Hinweises auf die Patenterteilung:
**14.06.89 Patentblatt 89/24**

(84) Benannte Vertragsstaaten:
**AT BE DE FR GB IT NL SE**

(56) Entgegenhaltungen:
**EP-A- 0 006 042**
**EP-A- 0 092 505**
**DE-A- 3 232 793**

**30th ELECTRONIC COMPONENTS CONFERENCE,**
**28.-30. April 1980, San Francisco, Seiten 254-257, IEEE,**
**New York, US; K.H. CAMERON u.a.: "A hybrid laser**
**transmitter module for use in optical fibre systems"**

(73) Patentinhaber: **Licentia Patent-Verwaltungs-GmbH,**
**Theodor-Stern-Kai 1, D-6000 Frankfurt/Main 70 (DE)**
Patentinhaber: **ANT Nachrichtentechnik GmbH,**
**Gerberstrasse 33, D-7150 Backnang (DE)**

(72) Erfinder: **Rode, Manfred, Dipl.-Ing., Ahornweg 3,**
**D-7900 Ulm-Unterweiler (DE)**

(74) Vertreter: **Schulze, Harald Rudolf, Dipl.-Ing. et al,**
**Licentia Patent-Verwaltungs-GmbH**
**Theodor-Stern-Kai 1, D-6000 Frankfurt/Main 70 (DE)**

## Beschreibung

Die Erfindung betrifft ein Gehäuse für eine faseroptische Anordnung nach dem Oberbegriff des Patentanspruchs 1.

Eine solche Anordnung ist bekannt aus der EP-A1 0 006 042. Dort wird ein Prägevorgang beschrieben, durch den ein metallisches Gehäuseunterteil erzeugt wird, welches eine ebene Bezugsfläche sowie daran anschliessend mindestens eine V-förmige Vertiefung enthält. Auf der Bezugsfläche kann ein elektrooptisches Bauelement, z.B. ein Halbleiterlaser, befestigt werden. In der V-förmigen Vertiefung kann ein Lichtwellenleiter so befestigt werden, dass das vom Halbleiterlaser ausgesandte Licht im wesentlichen parallel zur Längsachse des Lichtwellenleiters ist.

Eine derartige Anordnung hat den Nachteil, dass keine hochgenaue Justierung möglich ist. Denn beispielhaft auftretende Herstellungstoleranzen bei dem Lichtwellenleiter und/oder bei den Schichtdicken des Halbleiterlasers können dazu führen, dass die optischen Achsen des Halbleiterlasers sowie des Lichtwellenleiters einen nicht wegzujustierenden lateralen Versatz besitzen, der zu störenden Koppelverlusten führt. Ausserdem ist in nachteiliger Weise eine Überprüfung des Halbleiterlasers erst nach dessen Montage in dem Gehäuse möglich, was unwirtschaftlich ist. Weiterhin besteht in nachteiliger Weise die Möglichkeit, dass während der Befestigungsvorgänge, z.B. Löt- oder Klebevorgängen, des Halbleiterlasers und/oder des Lichtwellenleiters irreversible störende Dejustierungen auftreten können.

Der Erfindung liegt daher die Aufgabe zugrunde, ein gattungsgemässes Gehäuse dahingehend zu verbessern, dass eine hochgenaue sowie zuverlässige und kostengünstige Justierung einzeln vorgeprüfter Bauteile möglich ist.

Die Aufgabe wird gelöst durch die im kennzeichnenden Teil des Patentanspruchs 1 angegebenen Merkmale. Zweckmässige Ausgestaltungen und Weiterbildungen sind den Unteransprüchen entnehmbar.

Ein Vorteil der Erfindung besteht darin, dass für die faseroptische Anordnung erforderliche Halterungen als Vertiefungen ausgebildet sind, die durch einen Prägevorgang herstellbar sind. Bei einem Prägevorgang können geometrisch vielfältige Strukturen, z.B. Reliefstrukturen, nahezu zeitgleich sowie in zeitlich kurzen Abständen hergestellt werden. Ein Prägevorgang ist daher kostengünstig. Bei einem Prägevorgang ist vorteilhafterweise lediglich ein genau berechenbarer Verschleiss des Prägewerkzeugs vorhanden. Ein zufälliger Fehler, z.B. durch eine defekte Lagerung eines Fräs- und/oder Bohrmaschinenkopfes, ist nicht vorhanden.

Weiterhin werden bei einem Prägevorgang störende Materialverformungen vermieden. Bei einem beispielhaft gewählten zeitlich folgenden Fräsen zweier eng benachbarter Nuten ist eine störende Verformung des trennenden Steges möglich. Derartige Verformungen sind beim Prägevorgang dadurch vermeidbar, dass beide Nuten im wesentlichen zeitgleich geprägt werden. Beim Prägen hochgenauer Werkstücke ist lediglich ein hochgenaues Werkzeug erforderlich, nämlich das Prägewerkzeug. Weitere hochgenaue Bearbeitungsmaschinen, z.B. Bohr- und/oder Fräsmaschinen werden nicht benötigt.

Die Erfindung wird im folgenden näher erläutert anhand eines Ausführungsbeispieles unter Bezugnahme auf eine schematische Zeichnung.

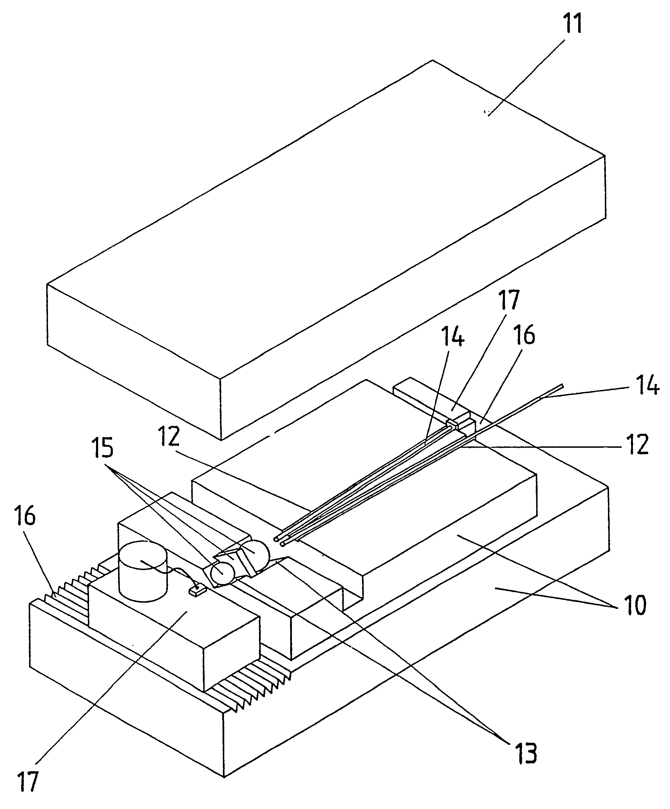

Die Figur zeigt ein Gehäuse für eine faseroptische Anordnung, ein optisches Koppelglied, das in der DE-OS 3 232 793 beschrieben ist. Dieses Koppelglied enthält zwei Lichtwellenleiter 14, von denen der längere als Ein-Ausgangslichtwellenleiter dient und der kürzere als räumliches Filter. Das optische Bauteil 15 enthält zwei Kugellinsen, zwischen denen eine planparallele Platte angeordnet ist, die auf einer Seite eine teilweise reflektierende Schicht besitzt. Mit dem optischen Bauteil 15 ist ein erstes elektrooptisches Bauelement 17 gekoppelt, das aus einem Halbleiterlaser und einem elektrischen Anschlussstück besteht, welche auf einer Wärmesenke befestigt sind, z.B. einem Kupferblock. An den als Gesichtsfeldblende wirkenden kurzen Lichtwellenleiter ist weiterhin ein weiteres, optoelektrisches Bauelement 17 angekoppelt, z.B. eine Fotodiode, die auf einer kapazitätsarmen Halterung befestigt ist.

Zur Vermeidung optischer Koppelverluste muss diese Koppelanordnung sehr genau justiert werden, d.h. mit einer Toleranz von ungefähr ±5 µm. Weiterhin ist es zweckmässig, zunächst die Bauelemente 17 einzeln auf ihre Funktionsfähigkeit zu prüfen und erst dann das vollständige Koppelglied aufzubauen. Insbesondere für eine industrielle Massenfertigung sollte ein derartiges Herstellungsverfahren kostengünstig ausführbar sein. Dieses wird durch das erfindungsgemässe Gehäuse ermöglicht. Dessen wesentlicher Bestandteil ist ein Unterteil 10, z.B. ein vorgeformter Körper aus einem Material, das zumindest im Arbeitstemperaturbereich des Koppelgliedes einen geringen temperaturabhängigen Ausdehnungskoeffizienten besitzt. Mit einem derartigen Material werden temperaturabhängige störende Dejustierungen des Koppelgliedes vermieden. Als Material sind z.B. sogenannte Invarlegierungen geeignet. Zur genauen und kostengünstigen Justierung und Halterung der Lichtwellenleiter 14 sowie der optischen Bauteile 15 werden in das Unterteil 10 erste sowie zweite Vertiefungen 12, 13 geprägt entsprechend der herzustellenden faseroptischen Anordnung. Diese Vertiefungen sind beispielsweise als V-förmige Nuten und/oder grabenförmige Vertiefungen ausgebildet, die mechanische Anschläge besitzen, z.B. zur senkrechten Justierung der erwähnten planparallelen Platte. In diese Vertiefungen 12, 13 werden die Lichtwellenleiter 14 sowie die Bauteile 15 eingelegt und fixiert, z.B. durch Kleben. Zur genauen Justierung eines vorgefertigten elektrooptischen und/oder optoelektrischen Bauelements 17 ist es zweckmässig, in das Unterteil 10 mindestens eine Bezugsfläche 16 zu prägen. Besonders vorteilhaft ist es, die Bezugsfläche 16 mechanisch zu strukturieren, z.B. V-förmige Nuten einzuprägen. Dadurch ist es beispielsweise möglich, bei dem auf einer Wärmesenke (Kupferblock) befestigten Halbleiterlaser eine Höhenjustierung bezüglich des Bauteils 15 durchzuführen. Diese Höhenjustierung erfolgt beispielsweise durch geringfügiges Zusammenpressen der Strukturierung und/oder durch geringfügiges Einpressen der Wärmesenke in die Strukturierung. Dazu werden relativ kleine mechanische Kräfte benötigt, so dass eine störende Dejustierung der übrigen Anordnung vermieden wird. Nach dieser Justierung wird das Bauelement 17 ebenfalls fixiert, z.B. durch Kleben. Das Oberteil 11 dient als Schutz der faseroptischen Anordnung. Daher kann das Oberteil aus einem nahezu beliebigen Material bestehen, z.B. ebenfalls aus der erwähnten Invarlegierung. Es ist zweckmässig, Ober- und Unterteil so auszubilden, dass diese formschlüssig zusammenpassen. Dieses wird durch entsprechend geformte Nuten, Falze und dergleichen erreicht. Weiterhin ist es zweckmässig, an dem Ober- und/oder Unterteil nicht dargestellte elektrische Kontakte anzubringen, z.B. elektrisch isolierte Durchführungskontakte, deren Abstand einem derzeit üblichen Rastermass der Kontaktierung entspricht, z.B. 2,54 mm (1/10 Zoll). Zwischen diesen Kontakten und den Bauelementen 17 werden innerhalb des Gehäuses elektrische Verbindungen hergestellt, z.B. durch das in der Halbleitertechnik derzeit übliche Bonden.

Die Erfindung ist nicht auf das beschriebene Ausführungsbeispiel beschränkt, sondern sinngemäss auf weitere anwendbar.

## Patentansprüche

1. Gehäuse für eine faseroptische Anordnung, welches ein metallisches, geprägtes Unterteil enthält, wobei durch die Prägung mindestens eine Bezugsfläche zur Aufnahme eines elektrooptischen Bauelements sowie mindestens eine V-förmige Vertiefung zur Aufnahme eines Lichtwellenleiters und/oder eines optischen Bauteils entstanden ist, dadurch gekennzeichnet, dass die Bezugsfläche (16) und/oder die diese berührende Fläche des Bauelements (17) derart mechanisch strukturiert sind, dass durch mechanische Kraft- und/oder Druckwendung eine Verformung dieser Fläche erreichbar ist, so dass eine Höhenjustierung des Bauelements (17) möglich ist.

2. Gehäuse nach Anspruch 1, dadurch gekennzeichnet, dass die Bezugsfläche (16) eine rillenförmige Strukturierung enthält, deren Rillenrichtung in wesentlichen senkrecht steht zur optischen Achse der faseroptischen Anordnung.

3. Gehäuse nach einem der vorhergehenden Ansprüche, dadurch gekennzeichnet, dass zumindest das Unterteil (10) aus einer Invarlegierung besteht.

4. Gehäuse nach einem der vorhergehenden Ansprüche, dadurch gekennzeichnet, dass in dem Unterteil (10) erste Vertiefungen (12), zweite Vertiefungen (13) sowie Bezugsflächen (16) geprägt sind für eine faseroptische Koppelanordnung, bestehend aus
– einem Halbleiterlaser, der auf einer Wärmesenke angebracht ist,
– einer Fotodiode, die an einer Halterung angebracht ist,
– einer mikrooptischen Anordnung, bestehend aus mindestens einer Kugellinse sowie einen optischen Bauteil, das eine teilweise reflektierende Planfläche besitzt,
– einem Lichtwellenleiterstück, das als Gesichtsfeldblende ausgebildet ist
– sowie einem Ein- und/oder Ausgangslichtwellenleiter (14) (Fig.).

5. Gehäuse nach einem der vorhergehenden Ansprüche, dadurch gekennzeichnet, dass an dem Unterteil (10) und/oder dem Oberteil (11) mindestens ein elektrischer Kontakt vorhanden ist, an welchen das Bauelement (17) elektrisch anschliessbar ist.

6. Gehäuse nach einem der vorhergehenden Ansprüche, dadurch gekennzeichnet, dass der Kontakt als elektrisch isolierte Durchführung ausgebildet ist.

## Claims

1. Housing for a fibre-optical arrangement and containing a metallic stamped lower part, wherein at least one reference surface for the reception of an electro-optical component as well as at least one V-shaped depression for the reception of an optical conductor and/or an optical component have come into being through the stamping, characterised thereby, that the reference surface (16) and/or the surface of the component (17) touching this are mechanically textured in such a manner that a deformation of this surface is attainable through mechanical application of force and/or pressure so that a height adjustment of the component (17) is possible.

2. Housing according to claim 1, characterised thereby, that the reference surface (16) contains a fluted texturing, the flute direction of which stands substantially perpendicularly to the optical axis of the fibre-optical arrangement.

3. Housing according to one of the preceding claims, characterised thereby, that at least in the lower part (10) consists of an INVAR alloy.

4. Housing according to one of the preceding claims, characterised thereby, that stamped in the lower part (10) are first depressions (12), second depressions (13) and reference surfaces (16) for a fibre-optical coupling arrangement consisting of
– a semiconductor laser which is mounted on a heat sink,
– a photo-diode which is mounted on a holder,
– a micro-optical arrangement consisting of at least one spherical lens as well as an optical component which possesses a partially reflecting planar surface,
– an optical conductor member which is constructed as field stop

– as well as an input and/or output optical conductor (14) (Fig.).

5. Housing according to one of the preceding claims, characterised thereby, that at least one electrical contact, to which the component (17) is electrically connectable, is provided at the lower part (10) and/or the upper part (11).

6. Housing according to one of the preceding claims, characterised thereby, that the contact is constructed as electrically insulated feed-through.

## Revendications

1. Boîtier pour un dispositif optique à fibres, comprenant une partie inférieure métallique, matricée, l'opération de matriçage ayant créé au moins une surface de référence destinée à recevoir un composant électro-optique, ainsi qu'au moins un creux en V destiné à recevoir une fibre optique et/ou un élément optique, caractérisé en ce que la surface de référence (16) et/ou la surface du composant (17) appliquée contre elle est ou sont structurée(s) mécaniquement de manière que la surface en question puisse être déformée par application d'un effort mécanique et/ou d'une pression en vue de l'ajustement en hauteur du composant (17).

2. Boîtier selon la revendication 1, caractérisé en ce que la surface de référence (16) possède une structuration rainurée dont les rainures ont une orientation sensiblement perpendiculaire à l'axe optique du dispositif optique à fibres.

3. Boîtier selon l'une des revendications précédentes, caractérisé en ce que sa partie inférieure (10) au moins est en Invar.

4. Boîtier selon l'une des revendications précédentes, caractérisé en ce que des premiers creux (12), des seconds creux (13) et des surfaces de références (16) sont formés par matriçage dans la partie inférieure (10) du boîtier pour un dispositif de couplage optique à fibres, comprenant

– un laser à semi-conducteur disposé sur un dissipateur thermique,

– une photodiode disposée sur un support,

– un dispositif micro-optique, formé d'au moins une lentille sphérique et d'un élément optique possédant une surface plane partiellement réfléchissante,

– un tronçon de fibre optique réalisé à la façon d'un diaphragme de champ, ainsi que

– une fibre optique d'entrée et/ou de sortie (14) (figure).

5. Boîtier selon l'une des revendications précédentes, caractérisé en ce que la partie inférieure (10) et/ou la partie supérieure (11) porte(nt) au moins un contact électrique auquel le composant (17) peut être connecté électriquement.

6. Boîtier selon l'une des revendications précédentes, caractérisé en ce que le contact est réalisé à la façon d'une traversée isolée électriquement.